# FASCICULE DE BREVET EUROPEEN

(11) **EP 0 719 499 B1**
(45) Date de publication et mention de la délivrance du brevet: **13.02.2002**
(21) Numéro de dépôt: 95402890.8
(22) Date de dépôt: 20.12.1995
(51) Int. Cl.: A01N 35/06, A01N 25/00

(54) **Procédé de traitement anti-germinatif de tubercules ou de bulbes**
Verfahren zur keimungshemmenden Behandlung von Knollen oder Zwiebeln
Process for the anti-germinative treatment of tubers and bulbs

(30) Priorité: 20.12.1994 FR 9415329
(43) Date de publication de la demande: 03.07.1996
(73) Titulaire: XEDA INTERNATIONAL, F-78150 Le Chesnay (FR)
(72) Inventeur: Sardo, Alberto, F-78150 Le Chesnay (FR)
(74) Mandataire: Polus, Camille

(56) Documents cités:
- EP-A- 0 161 989
- EP-A- 0 287 946
- WO-A-92/10934
- WO-A-95/09536
- WO-A-95/12311
- DE-A- 1 492 667
- FR-A- 2 566 681
- FR-A- 2 720 011
- US-A- 4 226 179
- JOURNAL OF THE SCIENCE OF FOOD AND AGRICULTURE, vol. 20, 1969 BARKING GB, pages 159-164, D.F.MEIGH 'SUPPRESSION OF SPROUTING IN STORED POTATOES BY VOLATILE ORGANIC COMPOUNDS'
- CHEMICAL ABSTRACTS, vol. 95, no. 17, 26 Octobre 1981 Columbus, Ohio, US; abstract no. 145184, J.L.BEVERIDGE ET AL. 'Assessment of some volatile organic compounds as sprout suppressants for ware and seed potatoes' & POTATO RES., vol. 24, no. 1, 1981 pages 61-76,
- CHEMICAL ABSTRACTS, vol. 107, no. 21, 23 Novembre 1987 Columbus, Ohio, US; abstract no. 195021, T.REYNOLDS 'Comparative effects of alicyclic compounds and quinones on inhibition of lettuce fruit germination' & ANN.BOT., vol. 60, no. 2, 1987 pages 215-223,
- CHEMICAL ABSTRACTS, vol. 119, no. 7, 16 Août 1993 Columbus, Ohio, US; abstract no. 65585, S.F.VAUGHN ET AL. 'Volatile monoterpenes as potential parent structures for new herbicides' & WEED SCI., vol. 41, no. 1, 1993 pages 114-119,
- CHEMICAL ABSTRACTS, vol. 119, no. 3, 19 Juillet 1993 Columbus, Ohio, US; abstract no. 24717, K.OOSTERHAVEN 'Inhibition of potato (Solanum tuberosum) sprout growth by the monoterpene S-carvone: reduction of 3-hydroxy-3-methylglutaryl coenzyme A reductase activity without effect on its mRNA level' & J. PLANT PHYSIOL., vol. 141, no. 4, 1993 pages 463-469,

## Description

L'invention concerne une méthode de traitement de tubercules ou bulbes, notamment de pommes de terre et oignons, pour inhiber leur germination.

Après la récolte des pommes de terre ou autres tubercules, celles-ci sont conservées à des températures de l'ordre de 20 à 30°C pendant environ 10 jours afin de durcir leur couche péridermique ou "peau", puis progressivement refroidies jusqu'à leur température de conservation qui est d'environ 10°C, généralement entre 7 et 10°C.

Pendant les premier à deuxième mois suivant leur récolte, les tubercules restent à l'état de repos et présentent peu de tendance à la germination.

Cependant, à la fin de cette période, les tubercules doivent être traitées chimiquement' afin d'inhiber la germination qui serait responsable d'effets néfastes, tels qu'une perte du poids frais, une conversion de l'amidon en sucres et une diminution de la qualité des tubercules ainsi qu'une détérioration de leur apparence.

En outre, les germes ainsi que les tissus avoisinants contiennent des taux élevés de glycoalcaloïdes toxiques qui ne sont pas détruits au cours de la cuisson.

A côté des agents chimiques habituels tels que le chloropopham (CIPC; 1-méthyléthyl-3-chlorophénylcarbamate) on utilise depuis peu des terpènes, tels que les α- et β-pinènes, le limonène et des monoterpènes oxygénés tels que la pulégone et la menthone ou l'isomenthone.

P. Diepenhorst et K.J. Hartmans ont décrit des formulations à base de d-carvone aptes à inhiber la germination des pommes de terre.

EP 161 989 décrit des compositions traitantes pour fruits et légumes appropriées à un traitement par thermonébulisation. La substance active utilisable peut être un antigerminatif. Ce document ne mentionne pas cependant l'utilisation de carvone. L'intérêt d'une application par thermonébulisation est un enrobage homogène des fruits et légumes.

J. of Science of Food and Agriculture, vol. 20, 1969, 156-164 propose une étude sur l'effet antigerminatif des pommes de terre de plusieurs substances organiques volatiles. Parmi les substances actives, la carvone est citée. Aucune distinction n'est faite entre l'efficacité respective des énantiomères de la carvone.

Potato res., vol. 24, n° 1, 1981, 61-76, relate l'action antigerminative de produits volatils appliqués sur des tubercules de pommes de terre. Parmi les composés testés, la carvone serait efficace à une dose de 500 mg/kg.

US 4 226 179 décrit un appareil permettant l'atomisation de compositions visqueuses à base de N-3-chlorophénylcarbamate d'isopropyle (agent antigerminatif connu) sans décomposition chimique du principe actif. L'atomisation est obtenue par chauffage à 21-121° C d'une solution concentrée du principe actif puis mélange de ce liquide avec un courant d'air gazeux sous pression.

FR 2 720 011, qui définit un droit national antérieur au titre de l'article 139(2) concerne une composition optimisée pour l'application de substance active de type biologique, telles que des bactéries, et ne cite pas l'utilisation de carvone.

Ann. Bot., 1987, 60(2), 215-23 rapporte l'inhibition de la germination de la laitue par des terpènes, notamment la (-)-carvone.

Weed Science, vol. 41, n° 1, 1993, 114-119, décrit l'effet antigerminatif de monoterpènes volatils vis-à-vis de mauvaises herbes et de certaines cultures. La (-)-carvone est citée comme exemple.

J. Plant. Physiol., vol. 141, n° 4, 1993, 463-469 relate l'étude du mécanisme d'inhibition de la germination des pommes de terre par la s-carvone ou d(+)-carvone.

FR 2 566 681 décrit un appareil de thermonébulisation et son utilisation dans le traitement des fruits et légumes.

WO 95/12311 décrit par ailleurs un traitement antigerminatif de pommes de terre, par du jasmonate, éventuellement en association avec de la carvone.

La demande WO 92/10934 décrit une méthode d'inhibition de la germination de tubercules consistant à exposer ceux-ci à une composition à base de monoterpènes oxygénés choisis parmi le cinéole, la fenchone et le menthol.

Plus précisément, WO 92/10934 est une étude sur l'efficacité de monoterpènes volatils comme inhibiteur de la germination de la pomme de terre. Il résulte de ce document que les l- et d-carvones bien qu'efficaces eu égard à leur activité antigerminatrice des tubercules sont peu recommandables dans la mesure où elles provoquent la nécrose des tubercules. Les cinéole, fenchone et menthol leur sont préférés.

Le tableau suivant est un extrait de WO 92/10934 :

| Agent traitant | Nécrose apparente |
|---|---|
| 1,4-cinéole | - |
| 1,8-cinéole | + |
| fenchone | - |
| menthol | - |
| (-)-carvone | +++ |
| (+)-carvone | ++ |
| - : pas de nécrose apparente + : légère nécrose ++ : nécrose +++ : forte nécrose. | |

L'exposition des tubercules à cette composition peut être effectuée par contact direct avec cette dernière sous forme liquide ou solide, ou bien dans une atmosphère dans laquelle les composés terpéniques ont été volatilisés. Dans ces conditions de traitement, le cinéole, la fenchone et le menthol sont préférés à d'autres terpènes oxygénés tels que la menthone, la pulégone ou la carvone, dans la mesure où ils permettent une meilleure inhibition de la germination tout en évitant la nécrose et l'amollissement des tubercules.

Toutefois, les méthodes de traitement actuellement disponibles ne se sont pas avérées satisfaisantes et présentent l'inconvénient majeur de nécessiter un renouvellement fréquent des applications.

Par exemple, lorsque le traitement est effectué par volatilisation des matières actives dans l'enceinte de stockage, le remplacement régulier de l'atmosphère dans cette enceinte par injection d'air froid dans l'enceinte, nécessaire à la bonne conservation des bulbes et tubercules, entraîne une fuite de produit traitant à l'extérieur de l'enceinte de stockage. La perte de disponibilité de la matière active correspondante doit être compensée par une introduction fréquente de matière active dans l'enceinte et rend le traitement onéreux.

Un des buts recherchés et atteints par la présente invention est de proposer une nouvelle méthode de traitement antigerminatif permettant d'utiliser efficacement des matières actives terpéniques.

Selon la présente invention, il a été découvert que la 1-carvone qui présente une toxicité moindre que les autres monoterpènes précités, y compris la d-carvone, permettait d'obtenir des résultats au moins aussi bons que ceux obtenus suivant les techniques classiques avec la d-carvone sur la germination des tubercules et des bulbes, notamment les pommes de terre et les oignons, dans des conditions de traitement utilisant une quantité réduite de matière active.

L'invention a ainsi pour objet un procédé de traitement destiné à inhiber la germination de tubercules ou de bulbes, notamment de pommes de terre et d'oignons, comprenant l'application d'une composition comprenant:
- 10 à 50% en poids de l-carvone ;
- 5 à 50% en poids d'un glycol ou d'un mélange de glycols ;
- 5 à 30% en poids d'un alcool ou d'un mélange d'alcools ;
- 5 à 50% en poids d'un ou plusieurs tensioactifs non ioniques ; et
- 3 à 30% en poids d'eau.

La formule plane de la carvone ou 2-méthyl-5-(1-méthyléthényl)-2-cyclohexèn-1-one) est la suivante:

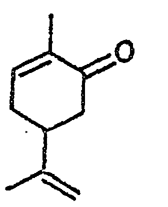

A la différence de la d-carvone (dont la source naturelle principale est le cumin) et des autres monoterpènes oxygénés précités la l-carvone est un composé naturellement ingéré en grande quantités dans l'alimentation humaine, par exemple lors de la consommation de certains plats à base de menthe ou lors de la mastication de chewing-gum, sa source naturelle principale étant la menthe commune ou Mentha Spicata.

La l-carvone peut être obtenue à partir de sources naturelles notamment la menthe commune (Mentha spicata) ou par voie de synthèse à partir du limonèn selon le schéma réactionnel suivant:

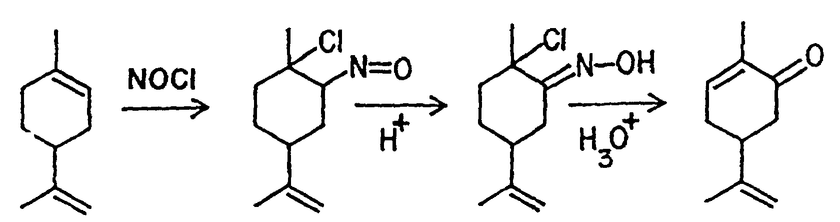

La mise au point d'une méthode de traitement antigerminatif efficace utilisant comme matière active un produit consommé de façon courante dans l'alimentation répond au besoin actuel de traitements non-toxiques et l'invention constitue à cet égard une avancée technologique d'un intérêt tout particulier.

La thermonébulisation est un procédé consistant à appliquer notamment sur des fruits et légumes un brouillard extrêmement fin (dont les gouttelettes ont une taille de l'ordre du micromètre), produit par injection d'un liquide dans un courant d'air chaud, qui sert de véhicule à des substances chimiques constituant les ingrédients actifs, le brouillard ainsi produit permettant un "enrobage" homogène de chaque fruit ou légume par le produit de traitement (ingrédient actif).

De manière surprenante, il est apparu que cette technique permet l'application aux tubercules ou bulbes de la l-carvone sous une forme hautement disponibile, en limitant les risques de perte de matière active dans l'atmosphère de stockage, et permet ainsi d'atteindre l'efficacité désirée avec des applications plus espacées qu'avec les procédés classiques.

Le procédé peut être mis en oeuvre à l'aide d'un appareil de thermonébulisation classique, notamment un appareil du type décrit dans FR-2 566 681 ou commercialisé sous la dénomination Electrofog Xeda^{R}, cette machine de thermonébulisation électrique étant constituée d'un ventilateur haute pression, d'une résistance électrique et d'une pompe volumétrique garantissant une régularité stricte des caractéristiques du brouillard produit et une introduction très progressive de la composition traitante dans la chambre de stockage.

De manière classique, les conditions permettant d'obtenir une taille de gouttes de 0,5 à 10 microns, notamment de l'ordre du micron, caractéristiques d'un brouillard de thermonébulisation, comprennent le chauffage de l'air à une température de 400 à 650°C avant l'injection du liquide.

Selon l'invention, la température du brouillard à la sortie de l'appareil de thermonébulisation est avantageusement choisie de 110°C à 200°C. On obtient un brouillard particulièrement satisfaisant à une température de sortie de l'appareil de thermonébulisation comprise entre 130 et 180°C, de préférence d'environ 160°C.

Les compositions utilisables selon l'invention comprennent avantageusement de 100 à 500 g/l, de préférence 100 à 350 g/l, notamment 250 g/l de l-carvone.

La composition de thermonébulisation, comprenant typiquement un solvant aqueux, peut comprendre en outre au moins un ingrédient inerte, à savoir non traitant, choisi parmi :
- un glycol ou un mélange de glycols, par exemple le monoéthylèneglycol ou le propylèneglycol, avantageusement à raison de 5 à 50 % en poids de la composition,
- un alcool ou un mélange d'alcools, par exemple l'isopropanol ou l'éthanol, avantageusement à raison de 5 à 30 % en poids de la composition,
- un ou plusieurs tensioactif(s) non-ionique(s), avantageusement à raison de 5 à 50 % en poids de la composition.

Selon la teneur en ces ingrédients inertes, la proportion d'eau dans la composition est avantageusement de 3 à 30 % en poids.

La l-carvone peut être utilisée en présence d'autres composés notamment de terpènes oxygénés ou non. Cependant dans le cas où la composition comprend d'autres terpènes, la l-carvone sera le composant majoritaire.

Le procédé selon l'invention comprend l'application auxdites tubercules ou bulbes d'une quantité de l-carvone suffisante pour en inhiber la germination.

Une telle quantité est variable et généralement comprise entre 5 et 50 g/tonne de tubercules ou bulbes traités par mois de conservation à partir du début du traitement.

Le traitement peut être initié à n'importe quel moment suivant la récolte ou durant la conservation des tubercules ou de bulbes.

Toutefois, lorsque les tubercules ou les bulbes sont conservés dans des conditions normales de conservation existant dans l'industrie (environ 10°C), le traitement débute de préférence 10 à 30 jours après la récolte ou au moment où les tubercules ou bulbes commencent à germer.

Le traitement peut être continu ou intermittent au cours de la durée du stockage. Il est de préférence appliqué avec une fréquence mensuelle à une dose de 15 g/tonne de tubercules/bulbes. Il est également préférable de le continuer ou le répéter de façon à maintenir une concentration efficace de l-carvone sur les tubercules ou les bulbes traitées.

Un traitement préféré selon l'invention comprend l'application d'une composition comprenant en plus d'un véhicule usuel de la l-carvone, à raison de :
- 5 à 50 g de matière active/tonne de tubercules ou de bulbes le premier mois, puis de
- 3 à 20 g/tonne, de préférence 15 g/tonne, les mois suivants.

On obtient selon l'invention des résultats bien meilleurs en ce qui concerne la protection contre la germination qu'avec les techniques classiques par trempage ou aspersion, ce dernier procédé distribuant la composition sous forme de grosses gouttes de 20 µm et plus sur la masse de tubercules à traiter. Suivant ces techniques, les tubercules (ou bulbes) sont mal protégés et manifestent assez aisément une tendance à la germination localisée, liée semble-t-il à une répartition irrégulière du produit dans la masse des tubercules à traiter et à la surface du tubercule.

Bien que l'efficacité de la substance déposée à la surface du tubercule ne soit pas uniquement déterminée par ce paramètre, il semble que la taille des gouttes imposée par la technique de thermonébulisation (de l'ordre du micron) soit un facteur déterminant dans la réussite du procédé de l'invention. Dans les conditions de l'invention, la thermonébulisation ne produit pas directement de vapeur à partir de la composition traitante à base de l-carvone, mais un brouillard de fines particules liquides qui sont capables de se déposer à la surface du tubercule pour l'enrober de manière homogène et distribuer progressivement la l-carvone à la surface.

On améliore également le rendement du procédé par rapport à la technique utilisant la volatilisation. En effet, par rapport à un traitement dans une atmosphère de vapeurs terpéniques, qui demande une fréquence d'application bi-hebdomadaire, on parvient à abaisser dans les mêmes conditions de stockage la fréquence à des applications mensuelles.

On donnera ci-après un exemple de composition et de procédé de traitement selon l'invention :
- **Exemple de composition :**

On fournit une composition de traitement comprenant les ingrédients suivants en pourcentage en poids :
- nonylphénol éthoxylé : 20
- propylèneglycol : 30
- alcool isopropylique : 12
- l-carvone : 25
- H₂O : QSP 100.

Cette composition a été appliquée à 24 tonnes de pommes de terre (variété Bintje) conservées à 5 à 7°C selon le protocole suivant :
- premier mois de traitement : 30 g de matière active par tonne de pommes de terre;
- mois suivants : 15 g de matière active par tonne de pommes de terre,
à l'aide du thermonébulisateur Electrofog Xeda® .

La température du brouillard à la sortie de l'appareil de thermonébulisation était d'environ 160°C. Le débit du thermonébulisateur était de 15 l/heure.

Le traitement a été appliqué pendant quatre mois consécutifs, à la suite de quoi les pommes de terre ont été placées à température ambiante, et la reprise de la germination observée.

Les résultats obtenus ont montré une inhibition de la germination aussi efficace que celle obtenue avec le CIPC par traitement unique 15 jours après la récolte à la dose de 10 g de matière active/tonne de pommes de terre.

## Revendications

1. Procédé de traitement destiné à inhiber la germination de tubercules ou de bulbes, comprenant l'application par thermonébulisation d'une composition comprenant :
- 10 à 50% en poids de I-carvone;
- 5 à 50% en poids d'un glycol ou d'un mélange de glycols ;
- 5 à 30% en poids d'un alcool ou d'un mélange d'alcools ;
- 5 à 50% en poids d'un ou plusieurs tensioactifs non ioniques ; et
- 3 à 30% en poids d'eau.

2. Procédé selon la revendication 1, **caractérisé en ce que** la température de sortie de l'appareil de thermonébulisation est de 110 à 200° C.

3. Procédé selon la revendication 2, **caractérisé en ce que** la température de sortie de l'appareil de thermonébulisation est de 130 à 180° C, de préférence d'environ 160° C.

4. Procédé selon l'une quelconque des revendications précédentes, **caractérisé en ce que** la quantité de I-carvone appliquée est comprise entre 5 et 50 g/tonne de tubercules ou de bulbes traités par mois de conservation à partir du début du traitement.

5. Procédé selon la revendication 4, **caractérisé en ce que** ladite composition est appliquée à raison de 5 à 50 g de matière active/tonne de tubercules ou de bulbes, le premier mois, puis à raison de 3 à 20 g/tonne, de préférence 15 g/tonne, les mois suivants.

6. Procédé selon l'une quelconque des revendications précédentes, **caractérisé en ce que** ladite composition comprend de 100 à 500 g/l, avantageusement 100 à 350 g/l, notamment 250 g/l, de I-carvone.

7. Procédé selon l'une quelconque des revendications précédentes, **caractérisé en ce que** l'alcool est choisi parmi l'éthanol, l'isopropanol et leurs mélanges.

8. Procédé selon l'une quelconque des revendications précédentes, **caractérisé en ce que** le glycol est choisi parmi le monoéthylèneglycol, le propylèneglycol et leurs mélanges.

## Patentansprüche

1. Verfahren zur keimhemmenden Behandlung von Knollen oder Pflanzenzwiebeln, welches das Aufbringen einer Zusammensetzung, die
- 10 bis 50 Gew.% l-Carvon,
- 5 bis 50 Gew.% eines Glykols oder Glykolgemischs,
- 5 bis 30 Gew.% eines Alkohols oder Alkoholgemischs,
- 5 bis 50 Gew.% eines oder mehrerer nichtionischer Tenside und
- 3 bis 30 Gew.% Wasser
enthält, durch Heißsprühen umfasst.

2. Verfahren nach Anspruch 1, **dadurch gekennzeichnet, dass** die Ausgangstemperatur der Heißsprühvorrichtung 110 bis 200°C beträgt.

3. Verfahren nach Anspruch 2, **dadurch gekennzeichnet, dass** die Ausgangstemperatur der Heißsprühvorrichtung 130 bis 180°C und vorzugsweise etwa 160°C beträgt.

4. Verfahren nach einem der vorhergehenden Ansprüche, **dadurch gekennzeichnet, dass** die aufgebrachte Menge an l-Carvon 5 bis 50 g/Tonne behandelte Knollen oder Pflanzenzwiebeln pro Monat Konservierung, ab Beginn der Behandlung, beträgt.

5. Verfahren nach Anspruch 4, **dadurch gekennzeichnet, dass** die Zusammensetzung für den ersten Monat mit einem Verhältnis von 5 bis 50 g Wirkstoff/Tonne Knollen oder Pflanzenzwiebeln und in den Folgemonaten mit einem Verhältnis von 3 bis 20 g/Tonne und vorzugsweise 15 g/Tonne aufgebracht wird.

6. Verfahren nach einem der vorhergehenden Ansprüche, **dadurch gekennzeichnet, dass** die Zusammensetzung 100 bis 500 g/l, vorteilhafterweise 100 bis 350 g/l, und insbesondere 250 g/l l-Carvon enthält.

7. Verfahren nach einem der vorhergehenden Ansprüche, **dadurch gekennzeichnet, dass** der Alkohol aus Ethanol, Isopropanol und deren Gemischen ausgewählt ist.

8. Verfahren nach einem der vorhergehenden Ansprüche, **dadurch gekennzeichnet, dass** das Glykol aus Monoethylenglykol, Propylenglykol und deren Gemischen ausgewählt ist.

## Claims

1. Treatment process for inhibiting the germination of tubers or bulbs, comprising the application by thermonebulization of a composition constituted by:
- 10 to 50 wt.% l-carvone,
- 5 to 50 wt.% of a glycol or a mixture of glycols,
- 5 to 30 wt.% of an alcohol or a mixture of alcohols,
- 5 to 50 wt.% of one or more nonionic surfactants and
- 3 to 30 wt.% of water

2. Process according to claim 1, **characterized in that** the temperature on leaving the thermonebulization apparatus is 110 to 200°C.

3. Process according to claim 2, **characterized in that** the temperature on leaving the thermonebulization apparatus is 130 to 180°C, preferably approximately 160°C.

4. Process according to any one of the preceding claims, **characterized in that** the 1-carvone quantity applied is between 5 and 50 g/tonne of treated tubers or bulbs per month of keeping as from the start of treatment.

5. Process according to claim 4, **characterized in that** said composition is applied at a rate of 5 to 50 g of active substance/tonne of tubers or bulbs during the first month and then at a rate of 3 to 20 g/tonne, preferably 15 g/tonne during the following months.

6. Process according to any one of the preceding claims, **characterized in that** said composition comprises 100 to 500 g/l, advantageously 100 to 350 g/l and in particular 250 g/l of l-carvone.

7. Process according to any one of the preceding claims, **characterized in that** the alcohol is chosen from among ethanol, isopropanol and mixtures thereof.

8. Process according to any one of the preceding claims, **characterized in that** the glycol is chosen from among monoethylene glycol, propylene glycol and mixtures thereof.
